# EUROPEAN PATENT APPLICATION

(11) **EP 1 731 731 A2**
(43) Date of publication of application: **13.12.2006**
(21) Application number: 05717229.8
(22) Date of filing: 22.03.2005
(51) Int. Cl.: F02B 61/02

(54) **USE OF DIESEL ENGINES FOR MOTORCYCLES**

(30) Priority: 22.03.2004 ES 200400705
(71) Applicant: Lopez Cano Toribio, Emiliano, 28021 Madrid (ES); Martinez Arroyo, Jose Manuel, 28021 Madrid (ES)
(72) Inventor: Lopez Cano Toribio, Emiliano, 28021 Madrid (ES); Martinez Arroyo, Jose Manuel, 28021 Madrid (ES)
(74) Representative: Munoz Garcia, Antonio
(86) International application number: PCT/ES2005/000155
(87) International publication number: WO 2005/091703

(57) **Abstract**

The invention relates to the construction of diesel-engine-powered motorcycles, quads, scooters and motortricycles consisting of: (i) using small commercial diesel engines which are supplied by a common-rail type electronic turbo-diesel injection system, independently of the cylinder number and arrangement thereof, with any type of motorcycle, quad, scooter or motortricycle, or (ii) converting the actual engine of the motorcycle, quad, scooter or motortricycle to common-rail diesel type, independently of the chassis of the vehicle in either case. The invention also relates to the use of small commercial diesel engines supplied by a common-rail type electronic turbo-diesel injection system with electrical generators and agricultural machinery.

## Description

### OBJECT

The object of the invention consists of the construction of diesel-engine-powered motorcycles, quads, scooters and motortricycles by means of using small commercial diesel engines which are supplied by a common-rail type electronic turbo-diesel injection system independently of the cylinder number and arrangement thereof, with any type of motorcycle, quad, scooter or motortricycle, or by means of converting the actual engine of the motorcycle, quad, scooter or motortricycle to common-rail diesel type, independently of the chassis of the vehicle in either case.

Another object of this invention is the use of small commercial diesel engines supplied by a common-rail type electronic turbo-diesel injection system with electrical generators and agricultural machinery.

The object of the invention is achieved by means of a method such as the one claimed in the attached claims.

### BACKGROUND

Attempts have previously been made to construct diesel engines which have been unsuccessful due to their excessive weight, little manageability, high level of vibrations and performance not consistent with the needs and characteristics of a conventional motorcycle. In other words, until now the use of diesel engines in motorcycles and in similar types of vehicles had no advantage.

Japanese patent number JP 166997 of Yamaha Motor Co. Ltd. entitled "Two-stroke Diesel Engine for Motorcycles" has the purpose of providing a two-stroke diesel engine for being installed in a motorcycle by means of arranging a fuel injection pump in a special position with respect to the engine.

On the other hand Japanese patent number JP 9317591 of Yamaha Motor Co. Ltd. entitled "Two-stroke Diesel Engine for Motorcycles" like the previously mentioned one has the purpose of efficient diesel fuel driving and preventing the diesel fuel injection pump from involving limits in the location of other parts of the engine.

Both patents are aimed at improving two-stroke diesel engines designed for motorcycles by means of using conventional fuel injection pumps that are mechanically powered from certain components of the engine itself, cams or crankshafts, and therefore mechanical, producing little acceleration due to this actuation.

This invention uses the common-rail electronic injection system with microprocessor management as is carried out in current automotive diesel engines, which provides accelerations and performance similar to motorcycles with a gasoline engine.

If the SMART CDI vehicle diesel engine is considered as an example due to the fact that it is the smallest turbo-diesel engine manufactured to date and due to the high performance it provides despite its small size, in addition to being more cost-efficient option than creating a new engine starting from zero, there are a number of beneficial features provided by this invention, overcoming the drawbacks of the previous attempts.
- It is versatile because it can be applied to any type of motorcycle, quad, scooter or motortricycle.
- It creates less pollution, has the features of a motorcycle because of its concept and reduced volume, which could be called ecological and logical, combined for example with the SMART CDI engine, complying with the new EURO-4 regulation, and provides a vehicle with little relative pollution. If these vehicles were used by most drivers, yearly pollution per person would be considerably reduced considering that traveling with a car with three times the cubic capacity of a motorcycle such as that of the invention produces much more pollution.
- It creates lower traffic density due to the reduction of the large space occupied on the highway or large cities due to the greater use of automobiles.
- It provides a high level of autonomy as a result of the fuel consumption, which is about one third of the consumption corresponding to a conventional gasoline engine.
- It offers fewer parking problems due to its small size in comparison to an automobile.
- It reduces operating and maintenance costs due to its low consumption and robustness. Fuel and maintenance costs for public and private organizations using a number of gasoline motorcycles and similar vehicles would be considerably reduced. For example, a high cubic capacity motorcycle uses about 6 liters at 100 km/h in 1 hour; however the diesel engine of the invention would use about 1.9 liters at 100 km/h in 1 hour.
- The armed forces could have motorcycles and quads that are suited to their needs with a high level of reliability and autonomy for ground troops and a low maintenance cost because they incorporate hydraulic tappets.
- These small, high-powered low-consumption engines could be used in high-capacity electrical generators and in agricultural machinery, etc.

This invention stresses the use of the CDI-type high-pressure injection systems or the like and can be applied to any type of engine and cylinder structure combination to be assembled in a motorcycle or similar vehicle. This system provides the great advantage that the weight of diesel engines is substantially reduced in combination with improving their performance.

The invention seeks to stress that to date there was no advantage to using a diesel engine in a motorcycle, but today, thanks to CDI-type technology and the advances in diesel technology, this development is truly advantageous.

### DESCRIPTION OF THE INVENTION

This invention generally comprises any use of CDI-type injection engines and derivatives thereof used in motorcycles, quads, scooters and motortricycles as well as in electrical generators, agricultural machinery, etc.

The use of these engines in vehicles and machines first starts from the knowledge of the needs for motorizing vehicles or machines as well as for the technology of CDI-type engines for the creation of an adaptation in each case not only of the engine but of its controls as well.

Generally the basic operation of the injection system of CDI-type engines is as follows: In a low-pressure system, the fuel accumulates, is filtered and pumped to the high-pressure system and cooled if needed. This system is in charge of producing and accumulating the high pressure, the intermediate accumulation and the injection. An electric fuel pump pumps the fuel through a filter to the high-pressure pump. The fuel is supplied from the high-pressure pump to the common rail manifold which is responsible for feeding the high-pressure injectors. The fuel returns to the deposit through the return and cooling. The pressure in the common rail is determined by the pressure sensor and the latter transmits this information to the control unit. The control unit knows the operation of the engine and the driver's wishes by means of these signals and is in charge of acting on the pressure regulating valve, applying variable current to it so as to regulate the pressure of the common rail and the opening time of the injectors according to needs. The exhaust gases pass through the catalytic converter and come into contact with the platinum coating. Platinum accelerates the combustion process but does not chemically modify it.

The CDI-type engine can be assembled on the following types of chassis:
- motorcycle chassis: steel tubular chassis, aluminum double beam chassis, aluminum tubular chassis, steel square tubular chassis, double beam bearing chassis and double cradle tubular chassis;
- conventional scooter chassis;
- conventional quad chassis;
- when the chassis is the engine itself
all combinations being valid.

The invention is based on using a diesel engine with a common rail system regardless of the type of cylinder construction or arrangement, possibly being of many types, such as a single-cylinder type, inline twin cylinder type, inline three cylinder type such as in the SMART, an inline four cylinder type, a V twin cylinder type, a V four cylinder type, a boxer twin cylinder type and others, possibly adding to the different combinations cylinder heads with 2 camshafts and 4 piston valves instead of a camshaft and 2 piston valves as in the SMART.

This invention stresses the use of the CDI-type injection system or the like in any type of four-stroke engine and cylinder structure combination to be assembled in a motorcycle or quad. This system provides the great advantage that the final weight of diesel engines provided with this CDI-type injection system or the like is substantially reduced and their performance is improved.

It can generally be said that the invention comprises three possibilities: a) using a commercial CDI-type diesel engine, b) using a commercial CDI-type diesel engine but with a block adapted to the needs of the use, and c) converting the series engine of a motorcycle or vehicle of this type to CDI-type diesel technology, always relating to the use of diesel engines in motorcycles and similar vehicles.

All relative position references hereinafter must be understood as they are perceived by the driver of the vehicle located in the driver's seat.

In case a) of adapting for a motorcycle, quad or motortricycle, the engine block is transformed for its new function, machining the necessary anchors and relocating different vitally important parts for their perfect operation, and the following operations are required:
1) Modifying the cylinder head by machining two threads on each side thereof so that the engine is secured to the chassis by means of screws.
2) Manufacturing a housing internally identical to the series housing but made of reinforced duralumin with two ties in its rear part for anchoring the engine to the chassis by its inner part.
3) Machining the engine block at its rear part with 8 and 10 mm diameter screws to be able to couple a manual or automatic 5 or 6 gear transmission on the rear side of the original engine block. The transmission of movement will be done through the momentum wheel but substituted with a smaller one according to the necessary development and with a cover with a housing for the sensor of the crankshaft, adapting the software necessary for its correct interpretation by the CPU module since the diameter of the crown wheel has been changed.
4) Modifying the software according to the new needs of the engine, creating a new injection cartography for its new use.
5) Creating a new minimized electrical installation for the new vehicle.
6) Replacing the clutch system with a bolt-operated oil-immersed multidisc system which in turn is driven by a conventional motorcycle system cable.
7) Making the transmission exit on the left side through a drive chain and kit, also being able to be a rubber toothed belt, moving the rear wheel.
8) Relocating the water pump next to the oil pump, the latter being the one that transmits movement to the water pump through machined bosses, taking into consideration that new coolant ducts must be created considering all the modifications at the same time.
9) Substituting the pedal accelerator sensor with a hand grip one but which is able to transmit the same information.
10) Modifying the software, taking into consideration the fact that the information from a speed sensor also reaches the CPU module so as to prevent injection disconnections.
11) Optionally being able to provide the engines with a cylinder head with 2 camshafts and 4 piston valves.

The second possibility b), i.e. using a commercial CDI-type diesel engine but with a block adapted to the needs of the use, consists of using not exactly the engine but its parts that do not require adaptation together with an engine block manufactured in 2 parts with suitable housings for the new transmission and with the corresponding adaptations of the different relocated elements. The operations to be carried out, in addition to those corresponding to the previously mentioned case a) with the exception of those indicated in sections 2) and 3), are:
1) Manufacturing an engine block with the same features as the original one only internally and on the plane where the cylinder head rests, but adding in the mold thereof the upper part of the housing for the primary and secondary, the supports for the new location of the starter engine, already including therein the relevant anchors for its location in the chassis of a motorcycle or similar type of vehicle.
2) The lower part of the block being separate as if it were a lower half-housing where the lower part of the housing necessary for the primary and secondary is machined. This part includes the crankshaft bearings, the entire lubrication system being suitably modified because the transmission and engine are lubricated with the same oil, as in current motorcycles. All this is joined together with screws, and silicone is applied to seal the planar surfaces instead of using a gasket between the two parts.

All this allows obtaining a more than complete modification for its assembly in motorcycles and similar vehicles at a lower cost, resolving the adaptation problems.

The third possibility c) consists of another much more cost-efficient and broader manufacturing formula than the previously mentioned ones, which is to use a conventional motorcycle engine, usually the engine of the vehicle itself, but adapting it to the common rail system by means of the relevant modifications that can be applied to any type of motorcycle engine, whether it is single-cylinder, twin cylinder, etc. Generally starting from the engine with a transmission, a modification of the cylinder head, even with a two overhead camshafts to which all the components of the common rail turbo-injection system are adapted with certain ease, is required.

Specifically, the operations to be carried out are:
1) Modifying the materials of the drive parts and bushings, cylinder head, etc., because they have to support more abrupt combustions so they do not lose reliability.
2) Creating camshafts consistent with the engine to be developed.
3) Adapting the suitable compression for the small turbo which is coupled and creating a new exhaust manifold with these features.
4) Creating on the engine cover several anchors for supporting the rail which will be screwed to it.
5) Carrying out machining on the cylinder head so as to secure the high-pressure pump and the vacuum pump with their corresponding bore holes to be able to receive movement from the camshafts. Said transmission of movement is communicated by a simple system such as that of the coupling of the previously mentioned water pump. The intake camshaft is in charge of transmitting movement to the high-pressure pump and that of the exhaust camshaft to the vacuum pump, which is necessary for regulating the turbo blowing pressure by means of an electrovalve controlled by the module.
6) Creating an optimal intake manifold for the new engine.
7) Modifying the intake ducts for the new system.
8) Replacing the starter engine and the battery with others of a high capacity due to the need for greater starting torque of the diesel engine.

By adapting the turbo system to a conventional motorcycle engine it must be taken into consideration that a vacuum is necessary to actuate it according to the needs of the engine. As previously explained, a vacuum pump is actuated by means of the camshaft, which pump is used to actuate the canister, but this step is controlled by an electric valve that is in charge of giving way to or removing the vacuum by means of an electric signal sent to it by the CPU module, more or less actuating the canister and the latter is in charge of further opening or closing the passage of exhaust gases, which transmit more or less movement to the turbo exhaust blades and these, since they are integral with the intake blades, are in charge of providing pressurized air to the engine according to the needs thereof. The pressure sensor is in charge of measuring this pressure in the intake manifold and the sensor sends that information to the CPU module so that it can assess it according to the needs and injection cartography it has, also affecting the injection time.

### BRIEF DESCRIPTION OF THE DRAWINGS

This invention will be described below in reference to the drawings which are explained below:
Figures 1 and 2 show different types of chassis of motorcycles, quads, scooters and motortricycles.
Figure 3 shows different types of engines according to their cylinder number and arrangement thereof and the camshafts.
Figure 4 shows a commercial turbo-diesel engine.
Figure 5 shows the parts of an adapted turbo-diesel engine, including views of the new housing.
Figure 6 shows the modification of the cylinder head of the engine.
Figure 7 shows an enlarged view of the engine assembly with the clutch mechanism.
Figures 8, 9 and 10 respectively and schematically show a side elevational view and a plan view of a motorcycle, a quad and a motortricycle provided with the engine.
Figure 11 shows the bosses and a handgrip position sensor and a Central Processing Unit (CPU).
Figure 12 shows a perspective view of the block and housing of a second preferred embodiment.
Figure 13 shows a perspective view of a Honda CBR-type Four cylinder engine and the components to be provided for a common rail system.
Figure 14 shows a side view of a generic engine with the mechanical modifications for providing a common rail system.

### PREFERRED EMBODIMENTS OF THE INVENTION

First, second and third preferred embodiments of this invention are described below by way of example according to the previously mentioned possibilities a), b) and c).

### First Preferred Embodiment

This embodiment consists of using the SMART (CDI) automotive engine with the suitable and necessary modifications for its new use. With the use of the common rail system in any version (I, II, III,...) or diesel variations of this system in motorcycle engines, a low weight, low consumption and high power will be obtained, increasing its durability and reliability, enormously reducing its maintenance.

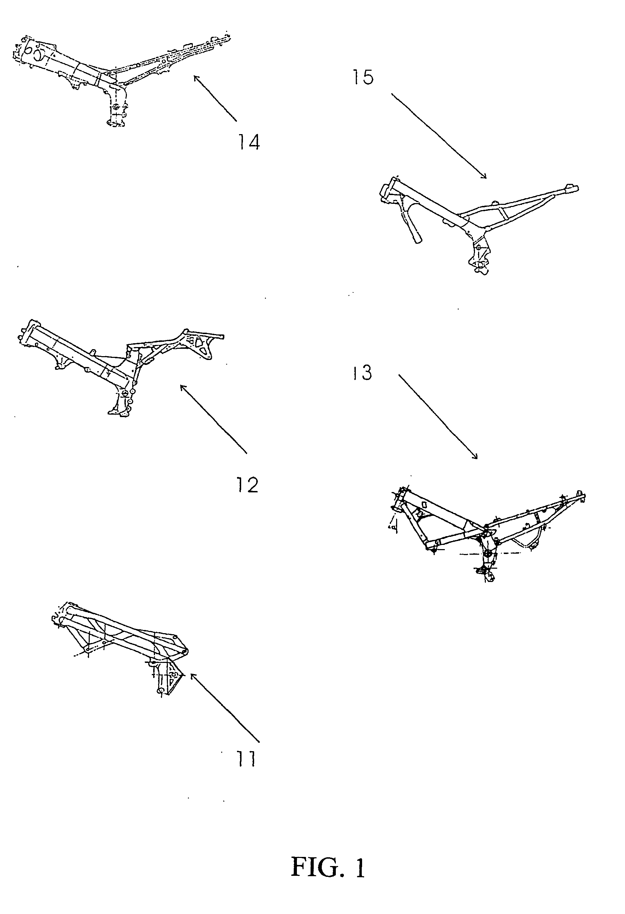

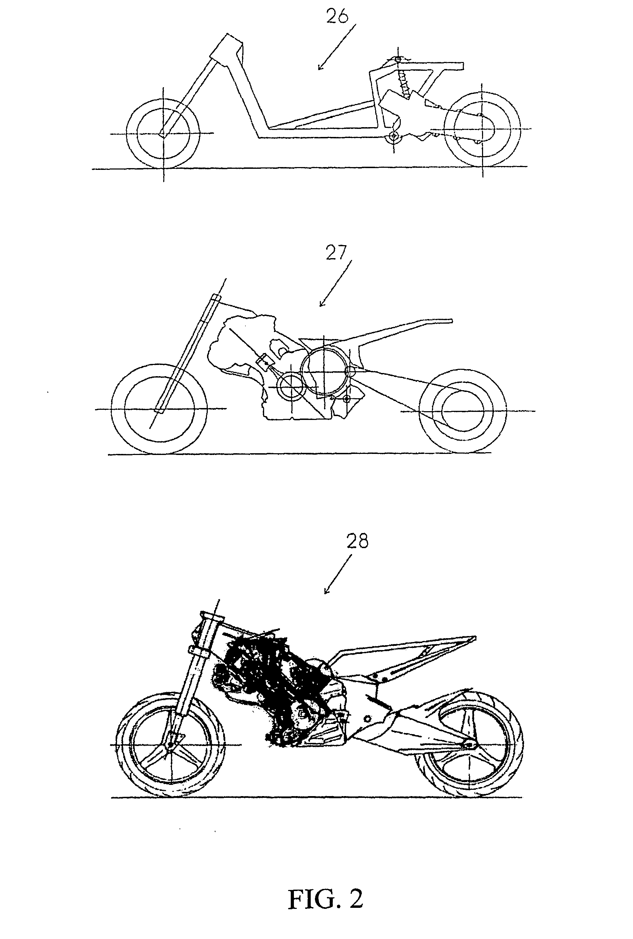

The CDI-type engine can be assembled on the following types of chassis represented in Figures 1 and 2:
- motorcycle chassis: steel or aluminum tubular chassis 11, aluminum double beam chassis 12, steel square tubular chassis 13, double beam bearing chassis 14 and double cradle tubular chassis 15;
- conventional scooter chassis 26;
- conventional quad chassis 27;
- when the chassis 28 is the engine itself

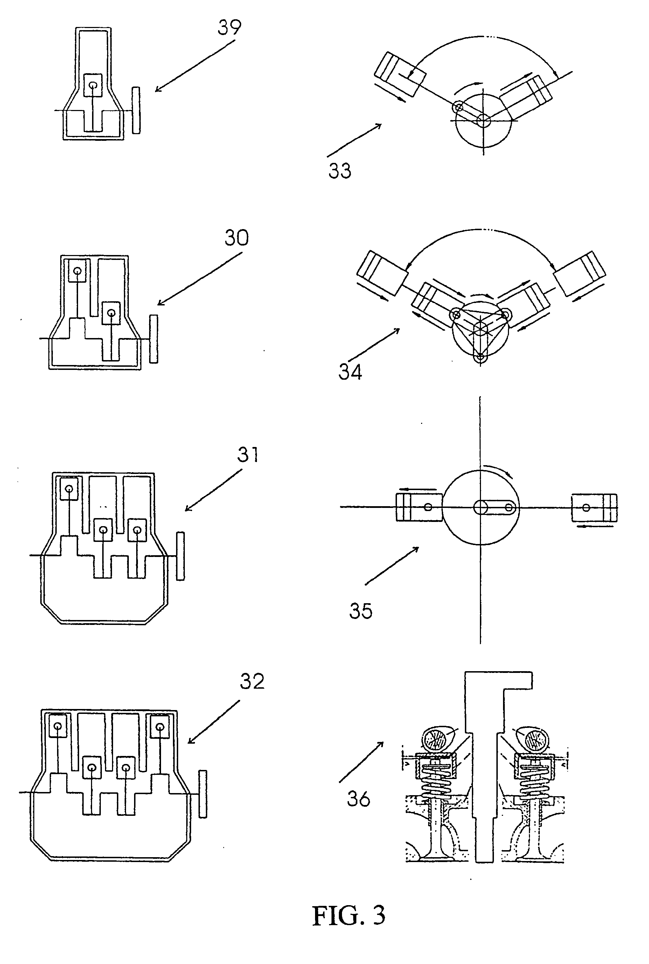

The diesel engine with a common rail system used in this invention is independent of the type of cylinder construction or arrangement, being able to be many types which are schematically shown in Figure 3, such as a single-cylinder type 39, inline twin cylinder type 30, inline three cylinder type 31 such as that of the SMART, an inline four cylinder type 32, a V twin cylinder type 33, a V four cylinder type 34, a boxer twin cylinder type 35 and others, optionally being able to add to the different combinations cylinder heads with 2 camshafts and 4 piston valves instead of 1 camshaft and 2 piston valves as in the SMART 36, all the engine and chassis combinations being valid.

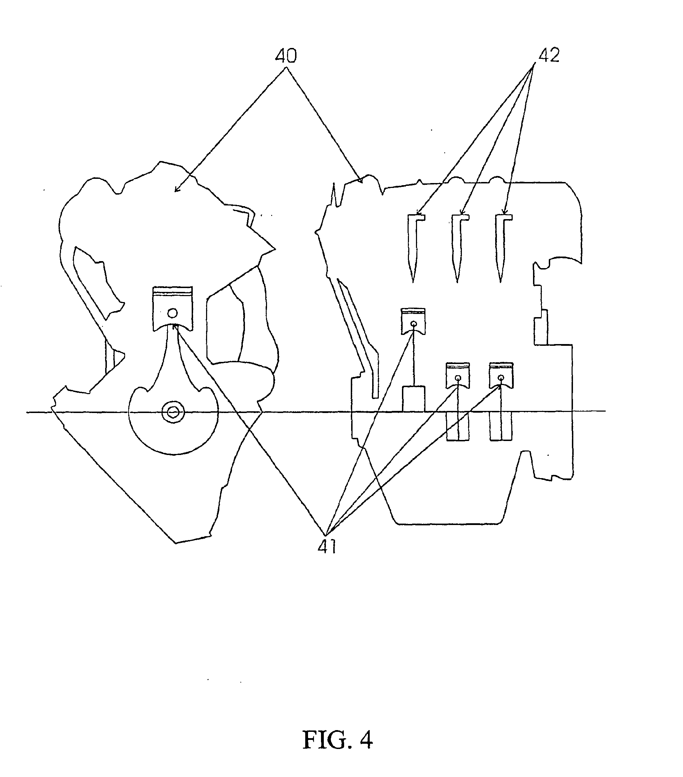

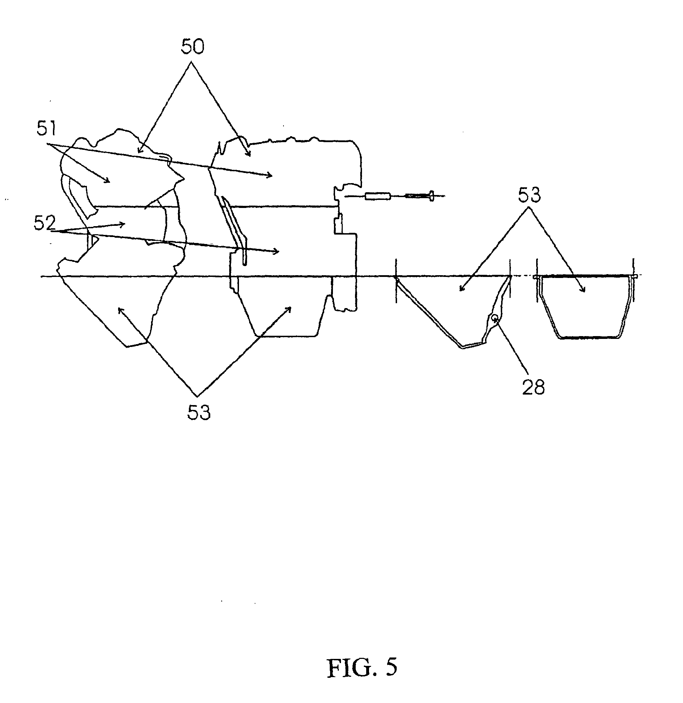

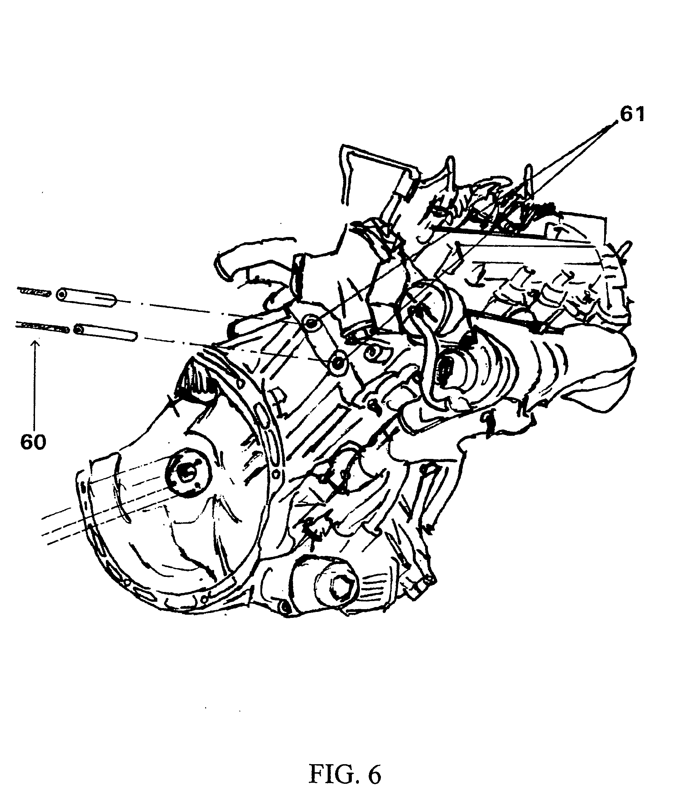

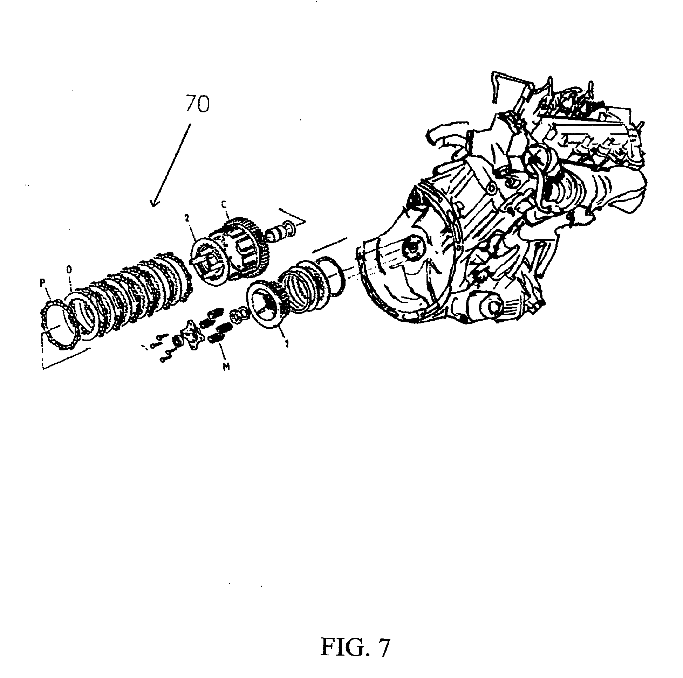

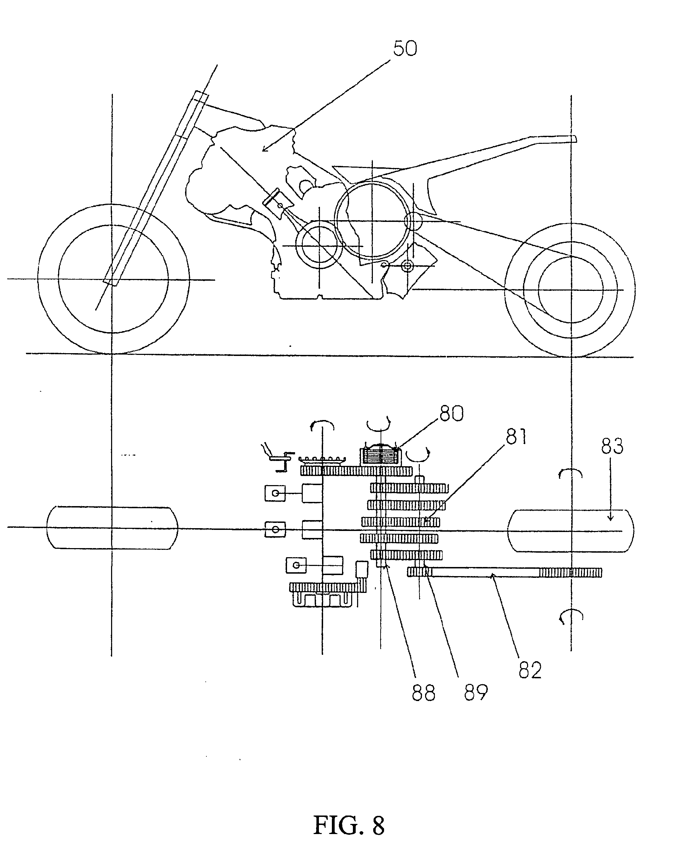

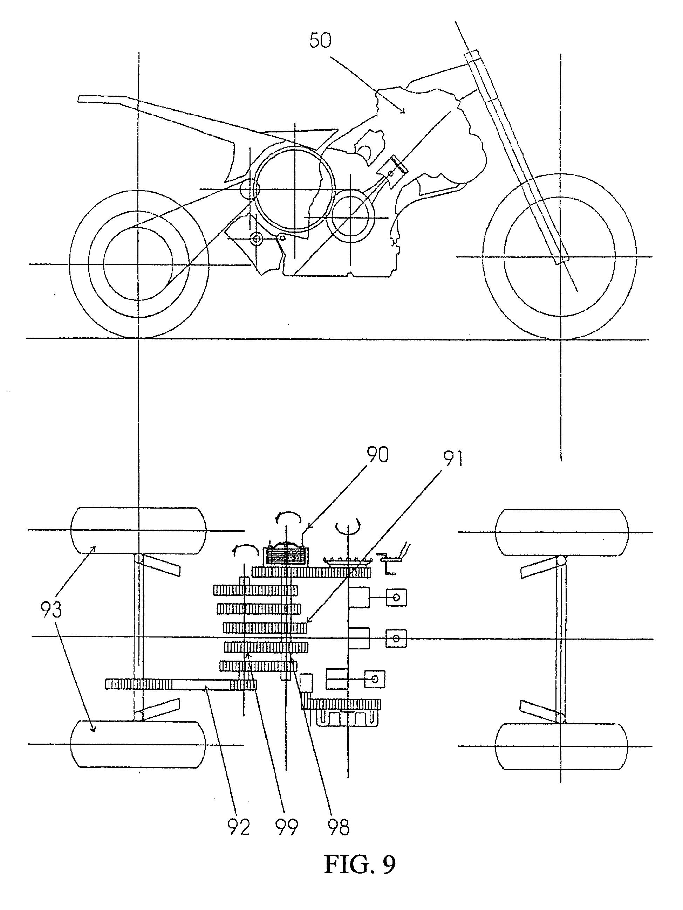

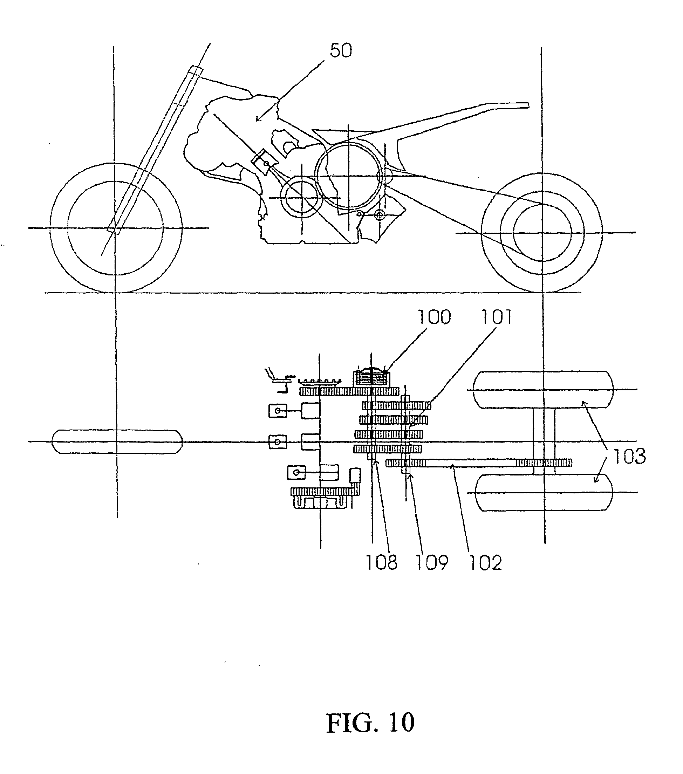

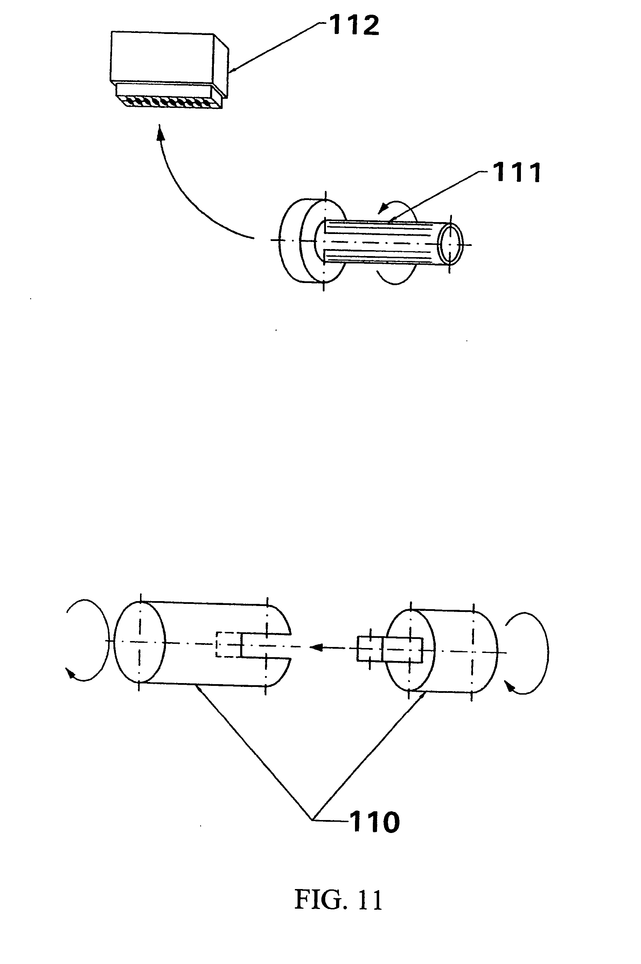

In the first preferred embodiment of this invention, consisting of the adaptation of a SMART CDI diesel engine 40 to a motorcycle, quad or motortricycle, the engine block is transformed for its new function, machining the necessary anchors and relocating different vitally important parts for their perfect operation. Figure 4 schematically shows the assembly of the engine 40, the three pistons 41 and the three injectors 42; Figure 5 schematically shows the adapted engine block 50 with housing 53, block 52 and cylinder head 51; Figure 6 shows a scheme of modifications to be made in the cylinder head; Figure 7 shows an enlarged view of the assembly 70 of the engine with the clutch mechanism in oil; Figures 8, 9 and 10 respectively and schematically show a side elevational view and a plan view of a motorcycle, a quad and a motortricycle provided with modified engine 50 and clutch mechanisms 80, 90, 100 and transmission 81, 91 and 101; and Figure 11 shows the bosses 110 and a handgrip position sensor 111 and a Central Processing Unit (CPU) 112, requiring the following operations:
1) Modifying the cylinder head 51 by machining two threads 61 on each side thereof so that the engine is secured to the chassis 11-15, 26-28 by means of screws 60.
2) Manufacturing a housing 53' internally identical to the series housing 53 but made of reinforced duralumin with two ties 58 in its rear part for anchoring the engine 50 to the chassis by its inner part.
3) Machining the engine block at its rear part with 8 and 10 mm diameter screws to be able to couple a manual or automatic 5 or 6 gear transmission on the rear side of the original engine block 40. The transmission of movement will be done through the momentum wheel but substituted with a smaller one according to the necessary development and with a cover with a housing for the sensor of the crankshaft, adapting the software necessary for its correct interpretation by the CPU module 112 since the diameter of the crown wheel has been changed.
4) Modifying the software according to the new needs of the engine 50, creating a new injection cartography for its new use.
5) Creating a new minimized electrical installation for the new vehicle.
6) Replacing the clutch system with a bolt-operated oil-immersed multidisc system 70 which in turn is driven by a conventional motorcycle system cable.
7) Making the transmission exit on the left side through a drive chain and kit 82, 92, 102, also being able to be a rubber toothed belt, moving the rear wheel or wheels 83, 93, 103.
8) Relocating the water pump next to the oil pump, the latter being the one that transmits movement to the water pump through machined bosses 110 which rotate interlocked with the water pump, the left, and oil pump, the right, taking into consideration that new coolant ducts must be created considering all the modifications at the same time.
9) Substituting the pedal accelerator sensor with a hand grip sensor 111, but which is able to transmit the same information.
10) Modifying the software, taking into consideration the fact that the information from a speed sensor also reaches the CPU module 112 so as to prevent injection disconnections.
11) Optionally being able to provide the engines (50) with a cylinder head with 2 camshafts and 4 piston valves.

### Second Preferred Embodiment

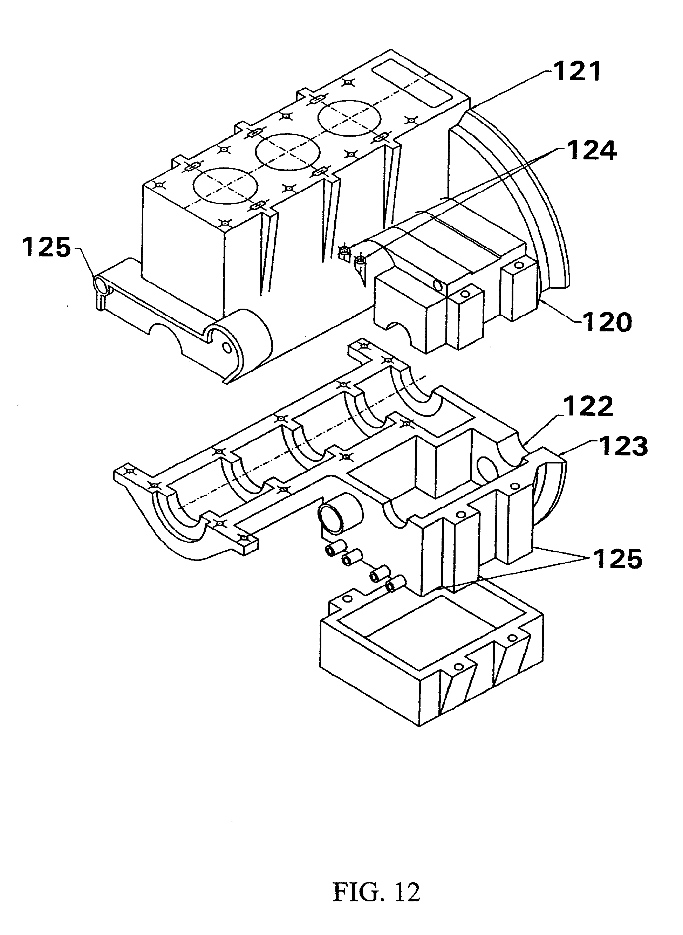

A second preferred embodiment of this invention consists of using a SMART CDI diesel engine in the same types of chassis (11-15, 26-28) of the first preferred embodiment but with a block adapted to the needs of the use, i.e. not exactly the engine is used but its parts, except the block, and the new engine block is manufactured in 2 parts with suitable housings for the new transmission and with the corresponding adaptations of the different relocated elements. The operations to be carried out (see Figure 12), in addition to those corresponding to the first preferred embodiment with the exception of those indicated in sections 2) and 3), are:
1) Manufacturing an engine block 120 with the same features as the original one only internally and on the plane where the cylinder head rests, but adding in the mold thereof the upper part 121 with the housing for the primary 88, 98, 108 and for the secondary 89, 99, 109, the supports for the new location of the starter engine 124, the relevant anchors 125 for the location of the engine 50 in the chassis of a motorcycle or similar type of vehicle (11-15, 26-28), according to the example of the component location structure in a conventional four cylinder motorcycle.
2) The lower part of the block 122 being separate as if it were a lower half-housing where the lower part of the housing necessary for the primary 88, 98, 108 and secondary 89, 99, 109 is machined. This part includes the crankshaft bearings, the entire lubrication system being suitably modified because the transmission and engine are lubricated with the same oil, as in current motorcycles. All this is joined together with screws, and silicone is applied to seal the planar surfaces 123 instead of using a gasket between the two parts 120 and 121.

All this allows obtaining a more than complete modification for its assembly in motorcycles and similar vehicles at a lower cost, resolving the adaptation problems.

### Third Preferred Embodiment

A third preferred embodiment consists of coupling a common rail system to the engine of a motorcycle, quad, scooter or motortricycle, suitably modifying all the components necessary for its correct operation, such that already having the aspect of the cycle part resolved makes the embodiment more cost-efficient to carry out. A valid example is to combine the engine of a Tryumph or BMW K75 motorcycle with the injection system of the Smart automobile because they are both three cylinder engines, but the system can be extrapolated to any type of engine of a motorcycle or similar vehicle, whether it is single-cylinder, twin cylinder, etc.

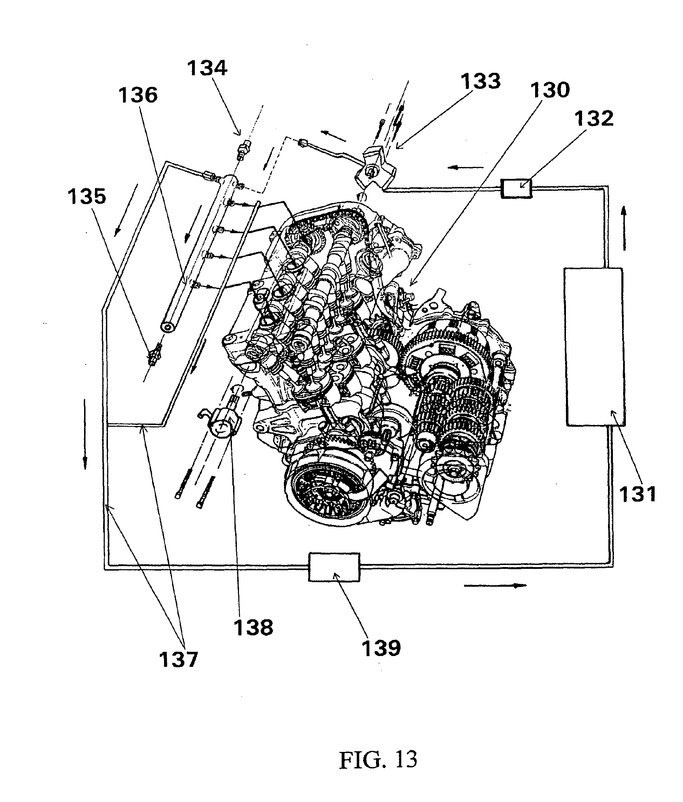

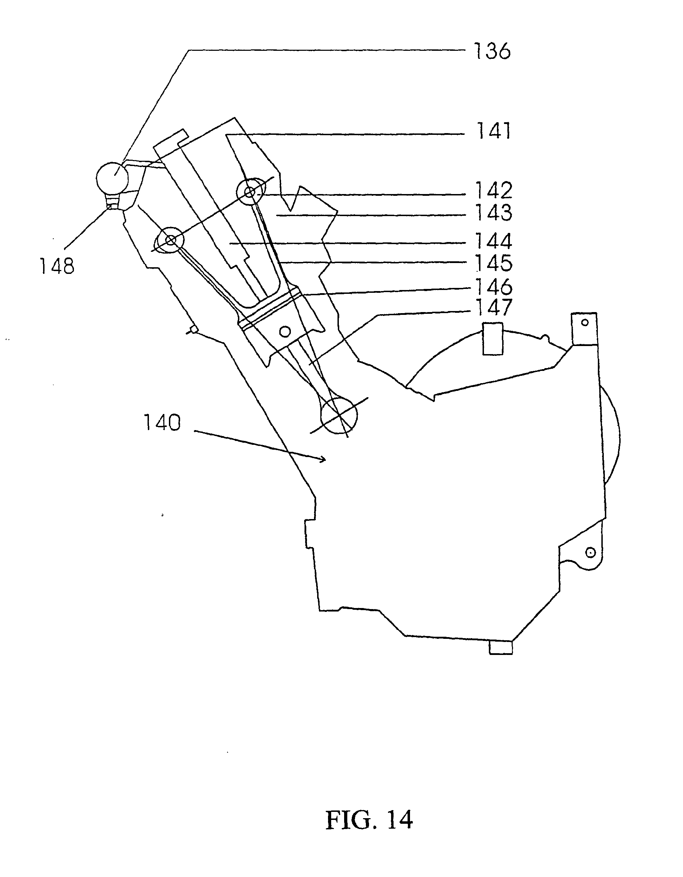

This formula allows a much more cost-efficient and broader manufacture than the previously mentioned ones. Figures 13 and 14 respectively show the mechanical modifications to be carried out in a Honda four cylinder engine 130 to use the common rail system and in a generic engine 140 to mechanically adapt it. Generally starting from the engine with a transmission, it is necessary to modify the cylinder head 143, even with a two overhead camshafts 142 to which all the components of the common rail turbo-injection system are adapted with certain ease, these components being: turbo vacuum pump 138, electric fuel pump 132, high-pressure pump 133, pressure regulator 134, pressure sensor 135, rail 136 and fuel return ducts 137 from the rail and from the injectors 144; and these ducts lead the excess fuel to the diesel fuel radiator 139 and to the fuel deposit 131 which are not adapted to the cylinder head 143.

Specifically, the operations to be carried out are:
1) Modifying the materials of the drive parts (camshaft or camshafts 142, valves 145, pistons 146 and rods 147) bushings and cylinder head 143 because they have to support more abrupt combustions due to the higher compression, so as to not lose reliability.
2) Creating camshafts 142 consistent with the engine 140 to be developed.
3) Adapting the suitable compression for the small turbo which is coupled and creating a new exhaust manifold with these features.
4) Creating on the cylinder head cover 141 of the engine 140 several anchors 148 for supporting the rail 136 which will be screwed to it.
5) Carrying out machining on the cylinder head 143 so as to secure the high-pressure pump 133 and the vacuum pump 138 with their corresponding bore holes to be able to receive movement from the camshafts 142. Said transmission of movement is communicated by a simple system such as that of the coupling of the water pump by means of machined bosses, the intake camshaft being in charge of transmitting movement to the high-pressure pump 133 and the exhaust camshaft transmitting movement to the vacuum pump 138 which is necessary for creating the vacuum regulating the turbo blowing pressure by means of an electrovalve (not shown) controlled by a CPU module 112.
6) Creating an optimal intake manifold for the new engine.
7) Modifying the intake ducts for the new system.
8) Replacing the starter engine and the battery with others of a high capacity due to the need for greater starting torque of the diesel engine.

This model is envisaged for intercity motorcycle drivers with a high load capacity, considering comfort and polyvalence in long distances or for police services, for example.

## Claims

1. A method for using a turbo-diesel engine with electronic injection in an auto-powered vehicle such as a motorcycle, scooter, quad or motortricycle, and in electrical generators and agricultural machinery,
**characterized in that**
said use consists of adapting a complete turbo-diesel engine with commercial common rail type electronic injection (40) or of the use of parts of a turbo-diesel engine with commercial common rail type electronic injection (40), except the block (52), adding a new block (120), wherein said engine (40) can be a single-cylinder engine (39), an inline twin cylinder engine (30), an inline three cylinder engine (31), an inline four cylinder engine (32), a V twin cylinder engine (33), a V four cylinder engine (34), a boxer twin cylinder engine (35) and the adapted turbo-diesel engine with electronic injection (50) can be assembled on the following types of chassis:
motorcycle chassis: steel or aluminum tubular chassis (11), aluminum double beam chassis (12), steel square tubular chassis (13), double beam bearing chassis (14) and double cradle tubular chassis (15);
conventional scooter chassis (26);
conventional quad chassis (27);
when the chassis (28) is the engine itself
and in the chassis of electrical generators and agricultural machinery
said method comprising the following operations:
(a) Modifying the cylinder head (51) by machining two threads (61) on each side thereof so that the engine (50) is secured to the chassis (11-15, 26-28) by means of screws (60).
(b) Modifying the software of the CPU module (112) according to the new needs of the engine (50), creating a new injection cartography for its new use.
(c) Creating a new minimized electrical installation for said auto-powered vehicle, said electrical generator or said agricultural machinery.
(d) Replacing the clutch system with a bolt-operated oil-immersed multidisc system (70) which in turn is driven by a conventional motorcycle system cable.
(e) Providing the transmission on the left side of the vehicle, transmitting the torque through a drive chain and kit (82, 92, 102), said transmission also being able to be by means of a rubber toothed belt for the movement of the rear wheel or wheels (83, 93, 103).
(f) Relocating the water pump next to the oil pump, the latter transmitting movement to the water pump through machined bosses (110) which rotate interlocked with the water pump, the left, and oil pump, the right, and creating new coolant ducts.
(g) Substituting the pedal accelerator sensor with a hand grip sensor (111) able to transmit the same information.
(h) Modifying the software of the CPU module (112), information reaching it from a speed sensor so as to prevent injection disconnections.
(i) Optionally being able to provide the engines (50) with a cylinder head with 2 camshafts and 4 piston valves.

2. A method for using a turbo-diesel engine with electronic injection in an auto-powered vehicle, an electrical generator or agricultural machinery according to claim 1,
**characterized in that**
when the use consists of adapting a complete commercial common rail type turbo-diesel engine with electronic injection (20), it further comprises the following operations:
(a) Manufacturing a housing (53') internally identical to the series housing (53) but made of reinforced duralumin with two ties (58) in its rear part for anchoring the engine (50) to the chassis by its inner part.
(b) Machining the block (52) of the engine (40) at its rear part with 8 and 10 mm diameter screws to be able to couple a manual or automatic 5 or 6 gear transmission on the rear side of the block (52), the transmission of movement from the engine (40) to said transmission being done through a new smaller momentum wheel with a new cover with a housing for the sensor of the crankshaft, adapting the software necessary for its correct interpretation by the CPU module since the diameter of the crown wheel has been changed.

3. A method for using a turbo-diesel engine with electronic injection in an auto-powered vehicle, an electrical generator or agricultural machinery according to claim 1,
**characterized in that**
when said use consists of using the parts of a common rail type turbo-diesel engine with electronic injection (40), except the block (52), adding a new block (120), it further comprises the following operations:
a) Manufacturing an engine block (120) with two pieces (121, 122) with housings for the new transmission and adaptations in the relocated elements (starter engine, sensor, alternator and water pump), with the same features as the original engine (40) in relation to its inner part and to the plane where the cylinder head rests, adding to said block (12), in the upper part (121) the upper part of the housing for the primary (88, 98, 108) and secondary (89, 99, 109), supports for the new location of the starter engine (124) and anchors (125) for the location of the engine in a chassis (11-15, 26-28).
b) Manufacturing the lower part of the block (122) in the form of a lower half-housing and machining the lower part of the housing for the primary (88, 98, 108) and secondary (89, 99, 109), this lower part of the block (122) including the crankshaft bearings, and the entire lubrication system being suitably modified because the transmission and engine are lubricated with the same oil.
c) Using silicone to seal the joint between the planar surfaces (123) of the upper (121) and lower (122) parts of the block and joining the upper part (121) and the lower part (122) of the block (120) with screws.

4. A method for using a turbo-diesel engine with electronic injection in an auto-powered vehicle, an electrical generator or agricultural machinery,
**characterized in that**
said use consists of converting the engine (130, 140) itself with a transmission of the auto-driven vehicle to a turbo-diesel engine with commercial common rail type electronic injection, said engine (130, 140) being able to be a single-cylinder engine (39), an inline twin cylinder engine (30), an inline three cylinder engine (31), an inline four cylinder engine (32), a V twin cylinder engine (33), a V four cylinder engine (34), a boxer twin cylinder engine (35), said method being able to be used in any auto-driven vehicle, electrical generator or agricultural machinery with the following types of chassis:
motorcycle chassis: steel or aluminum tubular chassis (11), aluminum double beam chassis (12), steel square tubular chassis (13), double beam bearing chassis (14) and double cradle tubular chassis (15);
conventional scooter chassis (26);
conventional quad chassis (27);
when the chassis (28) is the engine itself
and in the chassis of electrical generators and agricultural machinery
said method comprising the following operations:
a) Modifying or creating a new camshaft (143) including two overhead camshafts (142) to which the turbo injection system and the common rail components are adapted, these components being: vacuum pump (138), electric fuel pump (132), high-pressure pump (133), pressure regulator (134), pressure sensor (135), rail (136) and fuel return ducts from the rail and from the injectors (144); and said ducts lead the excess fuel to the diesel fuel radiator (139) and to the fuel deposit (131) which are not adapted to the cylinder head (143).
b) Modifying the materials of the drive parts of said engine (130, 140) comprising camshaft or camshafts (142), valves (145), pistons (146) and rods (147); and bushings and cylinder head (143).
c) Creating camshafts (142) consistent with the engine (140).
d) Adapting the suitable compression for the small turbo which is coupled and creating a new exhaust manifold for that compression.
e) Creating on the cylinder head cover (141) of the engine (140) several anchors (148) for supporting the rail (136) which will be screwed to it.
f) Carrying out machining on the cylinder head (143) so as to secure the high-pressure pump (133) and the vacuum pump (138) with their corresponding bore holes to be able to receive movement from the camshafts (142), said movement being communicated by means of a system such as that of the coupling of the water pump, the intake camshaft being in charge of transmitting movement to the high-pressure pump (133) and the exhaust camshaft transmitting movement to the vacuum pump (138) which is necessary for actuating the turbo by means of an electrovalve controlled by the CPU module (112).
g) Creating an optimal intake manifold for the engine (130, 140).
h) Modifying the intake ducts for the engine (130, 140).
i) Replacing the starter engine and the battery with others of a high capacity.

5. A motorcycle provided with an adopted turbo-diesel engine with common rail type electronic injection (50, 130, 140) according to any of previous claims 1 to 4.

6. A scooter provided with an adopted turbo-diesel engine with common rail type electronic injection (50, 130, 140) according to any of previous claims 1 to 4.

7. A quad provided with an adopted turbo-diesel engine with common rail type electronic injection (50, 130, 140) according to any of previous claims 1 to 4.

8. A motortricycle provided with an adopted turbo-diesel engine with common rail type electronic injection (50, 130, 140) according to any of previous claims 1 to 4.

9. An electrical generator provided with an adopted turbo-diesel engine with common rail type electronic injection (50, 130, 140) according to any of previous claims 1 to 4.

10. Agricultural machinery provided with an adopted turbo-diesel engine with common rail type electronic injection (50, 130, 140) according to any of previous claims 1 to 4.
